(19) Europäisches Patentamt European Patent Office Office européen des brevets

(11) **EP 2 426 566 B1**

(12) **EUROPEAN PATENT SPECIFICATION**

(45) Date of publication and mention of the grant of the patent:
**31.08.2016 Bulletin 2016/35**

(51) Int Cl.:
*G05D 1/08* *(2006.01)*        *B62J 25/00* *(2006.01)*
*B62K 3/00* *(2006.01)*        *B62K 17/00* *(2006.01)*

(21) Application number: **10769429.1**

(22) Date of filing: **26.02.2010**

(86) International application number:
**PCT/JP2010/001309**

(87) International publication number:
**WO 2010/125727 (04.11.2010 Gazette 2010/44)**

(54) **CONTROL PORTION FOR INVERTED VEHICLE**

STEUERVORRICHTUNG FÜR EIN INVERTIERTES FAHRZEUG

PARTIE COMMANDE POUR VÉHICULE INVERSÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.04.2009 JP 2009109591**

(43) Date of publication of application:
**07.03.2012 Bulletin 2012/10**

(73) Proprietor: **TOYOTA JIDOSHA KABUSHIKI KAISHA**
**Toyota-shi, Aichi-ken, 471-8571 (JP)**

(72) Inventor: **ANDOH, Fukashi**
**Toyota-shi**
**Aichi 471-8571 (JP)**

(74) Representative: **D Young & Co LLP**
**120 Holborn**
**London EC1N 2DY (GB)**

(56) References cited:
**EP-A1- 2 017 172        WO-A2-00/54721**
**JP-A- 2004 174 653        JP-A- 2006 205 839**
**JP-A- 2007 011 634        JP-A- 2007 280 408**
**JP-A- 2009 073 281        US-A1- 2004 172 165**

**Description**

**Technical Field**

The present invention relates to a control device (control portion) of an inverted vehicle, and particularly to the control device of the inverted vehicle which has wheel driving means and a link like load and moves while balance controlling to maintain the link like load at an inverted state.

**Background Art**

A vehicle which has a left and right pair of wheels coaxially disposed and moves while keeping at an inverted state is known. For example, an inverted two-wheels moving robot which autonomously moves while keeping the inverted state is disclosed in patent document 1 (Japanese Unexamined Patent Application Publication No. 2006-123014). A coaxial two-wheel vehicle which moves while balancing in a state in which a human stands on a step is disclosed in patent document 2 (Japanese Unexamined Patent Application Publication No. 2006-315666).

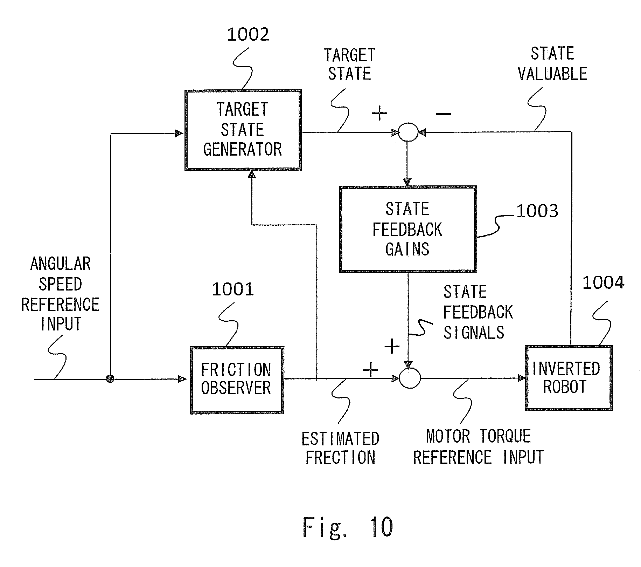

Fig. 10 is a diagram showing a configuration of a controller of the inverted two-wheel moving robot disclosed in the patent document 1.
In Fig. 10, 1001 denotes a friction observer, 1002 denotes a target state generator, 1003 denotes state feedback gains, and 1004 denotes an inverted robot.
An angular speed reference input is input to the friction observer 1001, and the friction observer 1001 calculates a friction of a motor and a friction between a wheel and a road as an estimated friction and outputs the estimated friction.
The angular speed reference input and the estimated friction are input to the target state generator 1002, and the target state generator 1002 calculates a target state of the inverted robot 1004 as a plant and outputs the calculation result.
A signal in which a state variable of the inverted robot 1004 is subtracted from the target state is input to the state feedback gains 1003, and the state feedback gains 1003 calculate state feedback signals, which make the inverted robot 1004 move in a desired manner, based on the input signal and output the state feedback signals.
The inverted robot 1004 is driven by the sum of the state feedback signals and the estimated friction.
As mentioned above, the conventional method of the inverted two-wheel moving robot controls the motions of the inverted robot 1004 based on a linearized model which linearlizes the inverted robot 1004 as a plant in the vicinity of a desired posture.

**Citation List**

**Patent Literature**

Patent document 1
Japanese Unexamined Patent Application Publication No. 2006-123014 (Fig. 4)
European Patent Publication EP 2 017 172 A1 is considered the closest Prior Art and describes the features of the preamble of claim 1.

**Summary of Invention**

**Technical Problem**

As explained above, the conventional inverted control executes a simple linear feedback control, however the inverted robot or the coaxial two-wheel vehicle has a structure in which a long link is disposed above the coaxial wheels, and which makes the link portion not stable at a target posture and easy to swing.
There is a problem that the link portion is not stable at a target posture and a vibration occurs in the vicinity of the target posture if the feedback control is continuously executed in accordance with tracking error from the target posture, for example, in the conventional method.
Incidentally, feedback gains are adjusted to suppress the vibrations in the vicinity of the target posture in the conventional method; however the simple adjustment of the feedback gains is not sufficient to maintain the vehicle at the target posture for the purpose of preventing overturning when the posture is apart from the target posture and at the same time to prevent vibrations in the vicinity of the target posture.
The present invention aims to provide the control device of the inverted vehicle which is capable of moving at a desired horizontal speed while executing a stable inverted balance control without the vibrations.

**Solution to Problem**

The present invention has a following structure to solve the problems mentioned above.

That is, the present invention provides a control device controlling a travel motion of an inverted vehicle which keeps an inverted state, the inverted vehicle having driving means having a wheel and a load controlled to keep the inverted state above the wheel through a link, the control device executing the following control of: defining an angle between a straight line connecting a center of gravity of the load with a center of gravity of the wheel and a vertical straight line as a load angular position; and applying only a damping to the inverted vehicle if the load angular position is in the vicinity of a load angular position reference input as a desired load angular position.

In the present invention, it is preferable that a damping range as a width in the vicinity of the load angular position reference input is calculated by multiplying an absolute value of the load angular position reference input by a predetermined coefficient.

In the present invention, it is preferable to define the damping as a viscous friction.

In the present invention, it is preferable that a damping parameter as the viscous friction is calculated as a function of a load angular position tracking error and the load angular position reference input, the load angular position tracking error being defined as a value in which the load angular position is subtracted from the load angular position reference input.

In the present invention, it is preferable that the damping parameter is calculated by subtracting half of the absolute value of the load angular position reference input from the load angular position tracking error, dividing an absolute value of the subtracted value by the absolute value of the load angular position reference input, and multiplying the divided value by a constant.

In the present invention, it is preferable that the damping parameter as the viscous friction is defined as a constant value.

In the present invention, it is preferable that the control device has: a switching linear torque unit calculating a damping torque and a linear feedback torque, the damping torque being obtained by applying a negative sign to a product of the load angular speed and the damping parameter, the linear feedback torque being obtained by multiplying at least one of a position tracking error, a speed tracking error, and an acceleration tracking error by a predetermined gain; and a control switching unit switching and outputting the damping torque and the linear feedback torque calculated by the switching linear torque unit.

In the present invention, it is preferable that the control switching unit outputs the damping torque if $0 \le \text{sgn}(\theta_1{}^*) \cdot e < h$, and outputs the linear feedback torque otherwise where $e = \theta_1{}^* - \theta_1$ is satisfied, $\theta_1$ is the load angular position reference input, $\theta_1$ is the load angular position, sgn $(\cdot)$ is a signum function indicating +1 if $\cdot$ is positive, -1 if $\cdot$ is negative, and 0 if $\cdot$ is zero, and h is the damping range calculated by multiplying the absolute value of the load angular position reference input by a predetermined coefficient.

**Advantageous Effects of Invention**

According to the present invention as mentioned above, it is possible to prevent the load angular position of the vehicle from vibrating in the vicinity of a desired value. Then, it is possible to converge the load angular position of the vehicle on the desired value without the vibration, and the vehicle can safely move at a desired speed.

**Brief Description of Drawings**

Fig. 1 shows a first embodiment according to an inverted vehicle of the present invention.
Fig. 2 shows a model of the vehicle.
Fig. 3 shows a simulation result of the load angular position.
Fig. 4 shows a simulation result of wheel horizontal speed.
Fig. 5 shows the first modified example.
Fig. 6 shows the second modified example.
Fig. 7 shows a coaxial two-wheel vehicle as the inverted vehicle.
Fig. 8 shows an inverted autonomous moving robot as the inverted vehicle.
Fig. 9 shows an inverted vehicle having a link mechanism swingably disposed above wheel driving means for four wheels.
Fig. 10 shows a diagram of a controller of an inverted two-wheel moving robot in the conventional method.

## Description of Embodiments

### (First Embodiment)

An embodiment according to the present invention is explained hereinafter with referring to drawings.

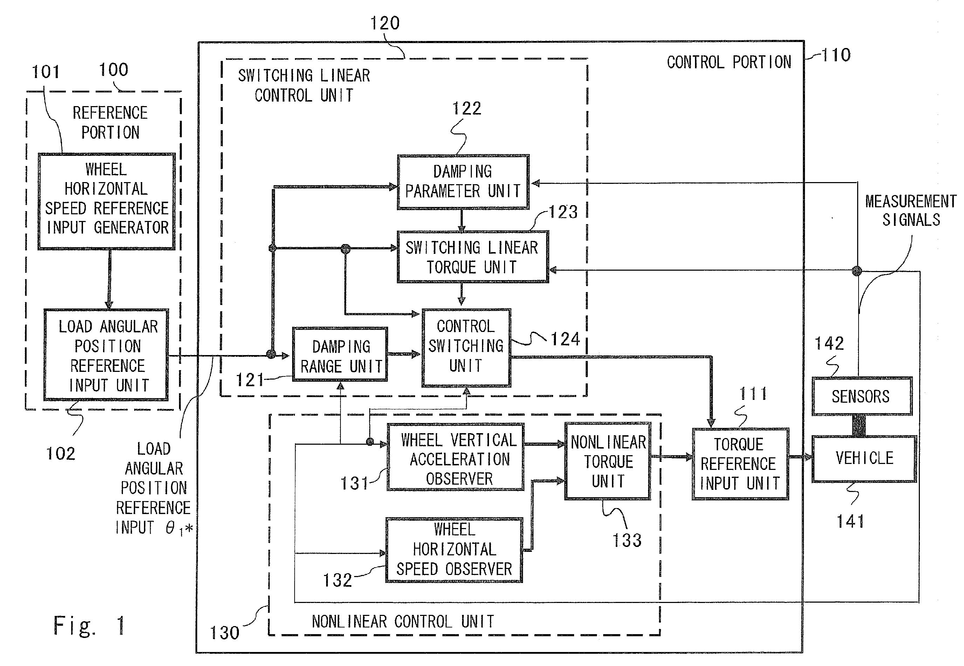

Fig. 1 shows the first embodiment according to an inverted vehicle of the present invention.

The inverted vehicle has a vehicle 141 as a plant, sensors 142 measuring the states of the vehicle 141, a reference portion 100 generating a desired target state, and a control portion 110 executing control based on measurement signals from the sensors 142 and a reference input from the reference portion 100.

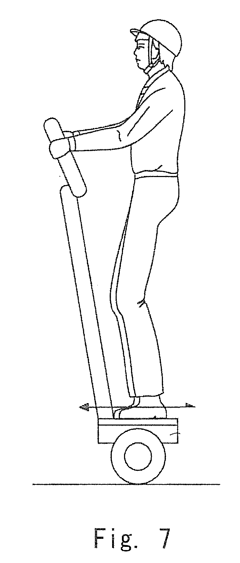

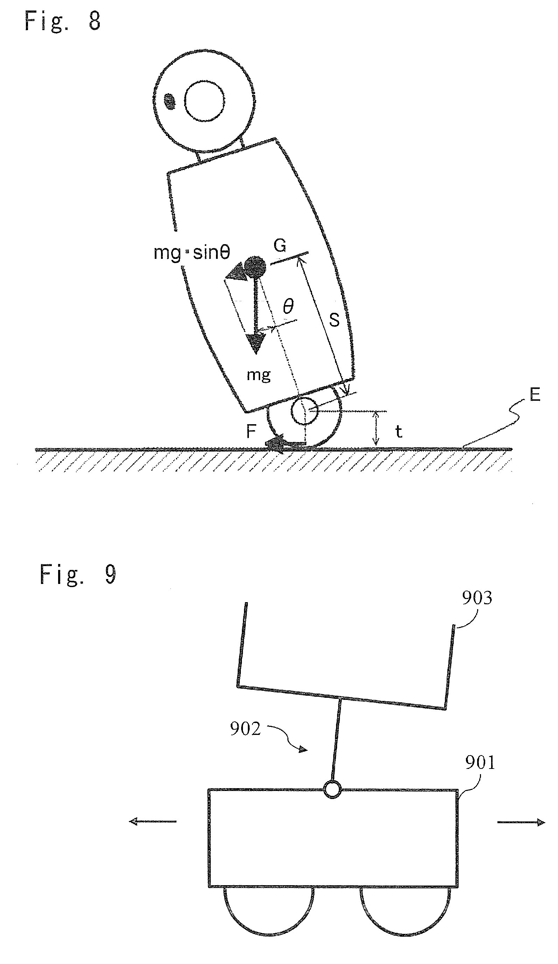

The vehicle 141 is generally exemplified by a coaxial two-wheel vehicle (Fig. 7), an inverted type autonomous moving robot (Fig. 8), and so on.

The vehicle is not limited to above examples and might be a vehicle which has driving means with wheel and a link like load, and executes a balance control to maintain the link-like load at an inverted state.

For example, the vehicle might be a structure illustrated in Fig. 9.

Fig. 9 is a structure in which a link mechanism 902 is swingably disposed above wheel driving means 901 for four wheels.

For example, an upper side of the link mechanism 902 might be formed like a basket 903, so that the wheel driving means 401 may carry goods in the basket 903.

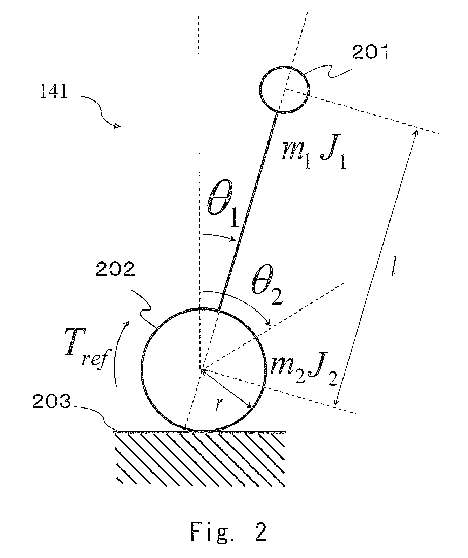

Hereinafter, the vehicle 141 as mentioned above is modeled on Fig. 2 or the like.

In Fig. 2, 201 denotes a load, 202 denotes wheels, and 203 denotes a road.

The vehicle 141 keeps an inverted state and moves as illustrated in Fig. 2.

The load 201 is a body of a robot, a passenger or a baggage mounted on the vehicle 141.

The wheels 202 carry the load 201 and propel the load 201 using a friction force acting on the road 203.

The sensors 142 measure an angle ($\theta_1$) of the load 201 and an angle ($\theta_2$) of the wheel 202.

The reference portion 100 has a wheel horizontal speed reference input generator 101 and a load angular position reference input unit 102.

The wheel horizontal speed reference input generator 101 generates and outputs a wheel horizontal speed reference input as a desired horizontal moving speed of the wheel 202 of the vehicle 141.

The load angular position reference input unit 102 to which the wheel horizontal speed reference is input calculates and outputs a load angular position reference input such that the wheel horizontal speed tracks the wheel horizontal speed reference input when the road 203 on which the vehicle 141 moves is horizontal.

The control portion 110 has a switching linear control portion 120, a nonlinear control portion 130, and a torque reference input unit 111.

The switching linear control unit 120 has a damping range unit 121, a damping parameter unit 122, a switching linear torque unit 123, and a control switching unit 124.

The load angular position reference input from the load angular position reference input unit 102, the load angular position $\theta_1$, and the wheel angle $\theta_2$, both being measurement signals from sensors 142, are input to the damping range unit 121.

The damping range unit 121 calculates a range of the load angular position as a damping range within which only a viscous friction is added by the control of the vehicle 141, as based on the input signals and outputs the calculation result.

The load angular position reference input ($\theta_1$*) from the load angular position reference input unit 102, the load angular position ($\theta_1$), and the wheel angle ($\theta_2$), both being measurement signals from sensors 142, are input to the damping parameter unit 122.

The damping parameter unit 122 calculates based on the input signals and outputs a damping parameter, which is used for a control within the damping range.

**[0050]** * The load angular position reference input ($\theta_1$*) from the load angular position reference input unit 102, the damping parameter from the damping parameter unit 122, the load angular position ($\theta_1$), and the wheel angle ($\theta_2$), both being measurement signals from sensors 142, are input to the switching linear torque unit 123.

The switching linear torque unit 123 calculates and outputs a damping torque and a linear feedback torque. The damping torque is obtained by changing the sign of a product of the load angular speed and the damping parameter, and the linear feedback torque is obtained by multiplying at least one of a position tracking error, a speed tracking error, and an acceleration tracking error, and a predetermined gain.

The damping range calculated by the damping range unit 121, the measurement signals from sensors 142, and the switching linear torque calculated by the switching linear torque unit 123 are input to the control switching unit 124. The control switching unit 124 outputs the switching linear torque calculated by the switching linear torque unit 123 while switching.

The nonlinear control unit 130 has a wheel vertical acceleration observer 131, a wheel horizontal speed observer 132, and a nonlinear torque unit 133.

The measurement signals from the sensors 142 are input to the wheel vertical acceleration observer 131, and the wheel vertical acceleration observer 131 estimates a vertical acceleration of the wheel 202 based on the input signals and outputs the estimation result as an estimated wheel vertical speed.

The measurement signals are input to the wheel horizontal speed observer 132, and the wheel horizontal speed observer 132 estimates a horizontal speed of wheel 202 based on the input signals and outputs it as an estimated wheel horizontal speed.

The estimated wheel vertical acceleration and the estimated wheel horizontal speed are input to the nonlinear torque unit 133, and the nonlinear torque unit 133 calculates and outputs a nonlinear torque indicating nonlinear dynamics of the vehicle 141.

The switching linear torque, which is switched and output by the control switching unit 124, and the nonlinear torque, which is output from nonlinear torque unit 133, are input to the torque reference input unit 111, and the torque reference input unit 111 outputs a torque reference input obtained by dividing a sum of these input signals and a radius of the wheel 202.

The vehicle 141 is driven by the torque reference input.

Hereinafter, a detailed control mechanism of the control portion 110 according to the first embodiment for motion cotrol of the vehicle 141 is explained.

In Fig. 2, the parameters are set as described below.

The symbol $m_1$ is a load mass,

$J_1$ is a load inertia moment,
$m_2$ is a wheel mass,
$J_2$ is a wheel inertia moment,
l is a distance between the center of gravity of the load and the center of the gravity of the wheel,
r is a wheel radius,
$\theta_1$ is the load angular position,
$\theta_2$ is the wheel angle, and
$T_{ref}$ is the torque reference input.

Furthermore, assuming that a wheel horizontal position is $x_2$ and a wheel vertical position is $y_2$, and a load horizontal position $x_1$ and a load vertical position $y_1$ are respectively described by a equation (1) and a equation (2) as indicated below.

[Equation 1]

$$x_1 = l \sin \theta_1 + x_2 \qquad (1)$$

[Equation 2]

$$y_1 = l \cos \theta_1 + y_2 \qquad (2)$$

A kinetic energy T and a potential energy V of the vehicle 141 are respectively described by a equation (3) and a equation (4) as indicated below using equation (1) and equation (2).

[Equation 3]

$$T = \frac{1}{2}m_1\left(\dot{x}_1^2 + \dot{y}_1^2\right) + \frac{1}{2}J_1\dot{\theta}_1^2 + \frac{1}{2}m_2\left(\dot{x}_2^2 + \dot{y}_2^2\right) + \frac{1}{2}J_2\dot{\theta}_2^2$$

$$= \frac{1}{2}m_1\left(\dot{x}_2^2 + \dot{y}_2^2 + l^2\dot{\theta}_1^2 + 2l\dot{\theta}_1\dot{x}_2\cos\theta_1 + 2r\dot{\theta}_2\dot{x}_2\right.$$

$$\left. - 2l\dot{\theta}_1\dot{y}_2\sin\theta_1\right) \tag{3}$$

$$+ \frac{1}{2}J_1\dot{\theta}_1^2 + \frac{1}{2}m_2\left(\dot{x}_2^2 + \dot{y}_2^2\right) + \frac{1}{2}J_2\dot{\theta}_2^2$$

[Equation 4]

$$V = m_1gy_1 + m_2gy_2 \tag{4}$$

Then, the equation of motion of the vehicle 141 is derived as equations (5) through (8) using the Euler - Lagrange equation.

[Equation 5]

$$\left(m_1l^2 + J_1\right)\ddot{\theta}_1 + m_1l\ddot{x}_2\cos\theta_1 - m_1l\ddot{y}_2\sin\theta_1$$

$$- m_1l\dot{\theta}_1\dot{x}_2\sin\theta_1 - m_1l\dot{\theta}_1\dot{y}_2\cos\theta_1$$

$$+ m_1l\dot{\theta}_1\ddot{x}_2\sin\theta_1 + m_1l\ddot{\theta}_1\dot{x}_2\sin\theta_1 + m_1l\dot{\theta}_1^2\dot{x}_2\cos\theta_1 \tag{5}$$

$$+ m_1l\ddot{\theta}_1\dot{y}_2\cos\theta_1 + m_1l\dot{\theta}_1\ddot{y}_2\cos\theta_1 - m_1l\dot{\theta}_1^2\dot{y}_2\sin\theta_1 = 0$$

[Equation 6]

$$J_2\ddot{\theta}_2 = T_{ref} \tag{6}$$

[Equation 7]

$$\left(m_1 + m_2\right)\ddot{x}_2 + m_1l\ddot{x}_2\cos\theta_1 - m_1l\dot{\theta}_1\dot{x}_2\sin\theta_1 = 0 \tag{7}$$

[Equation 8]

$$\left(m_1 + m_2\right)\ddot{y}_2 - m_1l\ddot{\theta}_1\sin\theta_1 - m_1l\dot{\theta}_1^2\cos\theta_1 + m_2g = 0 \tag{8}$$

The symbol g is the gravitational acceleration.

Furthermore, equation (6) and equation (7) are rewritten as equation (9) and equation (10) taking into account a viscous friction between the wheel 202 and the road 203.

The symbol D is the viscous friction coefficient.

[Equation 9]

$$J_2 \ddot{\theta}_2 + D\left( \dot{\theta}_2 - \frac{\dot{x}_2}{r} \right) = T_{ref} \tag{9}$$

[Equation 10]

$$(m_1 + m_2)\ddot{x}_2 + m_1 l \ddot{x}_2 \cos\theta_1 - m_1 l \dot{\theta}_1 \dot{x}_2 \sin\theta_1 + D(r\dot{\theta}_2 - \dot{x}_2) = 0 \tag{10}$$

Equation (11) is derived from equation (9) and equation (10).

[Equation 1]

$$(m_1 + m_2)\ddot{x}_2 + m_1 l \ddot{x}_2 \cos\theta_1 - m_1 l \dot{\theta}_1 \dot{x}_2 \sin\theta_1 - r J_2 \ddot{\theta}_2 = -r T_{ref} \tag{11}$$

Equation (12) is obtained by subtracting equation (11) from equation (5).

[Equation 12]

$$(m_1 l^2 + J_1)\ddot{\theta}_1 + N_x + N_y = r T_{ref}$$

$$N_x = -(m_1 + m_2)\ddot{x}_2 + m_1 l \dot{\theta}_1 \ddot{x}_2 \sin\theta_1 + m_1 l \ddot{\theta}_1 \dot{x}_2 \sin\theta_1 + m_1 l \dot{\theta}_1^2 \dot{x}_2 \cos\theta_1$$

$$N_y = r J_2 \ddot{\theta}_2 - m_1 l \ddot{y}_2 \sin\theta_1 - m_1 l \dot{\theta}_1 \dot{y}_2 \cos\theta_1 \tag{12}$$

$$+ m_1 l \dot{\theta}_1 \dot{y}_2 \cos\theta_1 + m_1 l \dot{\theta}_1 \ddot{y}_2 \cos\theta_1 - m_1 l \dot{\theta}_1^2 \dot{y}_2 \sin\theta_1$$

The symbol $N_x$ is a nonlinear term that is a function of the wheel horizontal position $x_2$, and the symbol $N_y$ is a nonlinear term that is a function of the wheel vertical position $y_2$.

Assuming that the load angular position $\theta_1$ varies much slower than the wheel horizontal position $x_2$, equation (11) is rewritten as equation (13).

[Equation 13]

$$c_1 \ddot{x}_2 + c_2 \dot{x}_2 = r J_2 \ddot{\theta}_2 - r T_{ref}$$

$$c_1 = m_1 + m_2 + m_1 l \cos\theta_1$$

$$c_2 = -m_1 l \dot{\theta}_1 \sin\theta_1 \tag{13}$$

Portions of equation (13) varying much slower than the wheel horizontal position $x_2$ are expressed as constants c1, c2 and c3.

A wheel horizontal speed $dx_2/dt$ is described as equation (14) using equation (13).

[Equation 14]

$$\dot{x}_2 = L^{-1}\left\{ \frac{1}{c_1 s + c_2}\left(s^2\Theta_2 - rT_{ref}\right)\right\} \qquad (14)$$

The symbol $s^2 \cdot \Theta_2$ is the Laplace transform of a wheel acceleration ($d^2 0_Z/dt^2$), and the symbol L is the Laplace transform.

The wheel horizontal speed observer 132 calculates the estimated wheel horizontal speed using equation (14).

Meanwhile, equation (15) is derived by solving equation (8) for a wheel vertical acceleration ($d^2 y_2/dt^2$).

[Equation 15]

$$\ddot{y}_2 = \frac{m_1 l \ddot{\theta}_1 \sin\theta_1 + m_1 l \dot{\theta}_1^2 \cos\theta_1 - m_2 g}{\left(m_1 + m_2\right)} \qquad (15)$$

The wheel vertical acceleration observer 131 calculates the estimated wheel vertical acceleration using equation (15).

Assuming that the wheel horizontal speed reference input is $v_2^*$ (= the first order time derivative of $x_2^*$), the load angular position reference input $\theta_1^*$, which is the load angular position $\theta_1$ when the wheel horizontal speed ($dx_2/dt$) equals to the wheel horizontal speed reference input $v_2^*$ for the flat road 203, is described by * equation (16). That is, the load angular position reference input $\theta_1^*$ is the arctangent of the value obtained by dividing the wheel horizontal speed reference input by the gravitational acceleration.

[Equation 16]

$$\theta_1^* = tan^{-1}\frac{\ddot{x}_2^*}{g} \qquad (16)$$

The wheel horizontal speed reference input generator 101 outputs the wheel horizontal speed reference input $v_2^*$ (= the first order time derivative of $x_2^*$), and the load angular position reference input unit 102 calculates the load angular * position reference input $\theta_1$ using equation (16) and outputs the calculation result.

Equation (17) is derived by substituting equation (14) and equation (15) into equation (12).

[Equation 17]

$$\left(m_1 l^2 + J_1\right)\ddot{\theta}_1 + N_x + N_y = rT_{ref} \qquad (17)$$

Equation (17) is rewritten as equation (18).

[Equation 18]

$$\left(m_1 l^2 + J_1\right)\ddot{\theta}_1 = u$$
$$u = rT_{ref} - N_x - N_y \qquad (18)$$

The symbol u is the switching linear torque.

Then, consider the switching linear torque u in equation (19) such that the load angular position $\theta_1^*$ converges to the load angular position reference input $\theta_1^*$.

[Equation 19]

$$u = \begin{cases} \beta\dot{e} + \kappa e & sgn\left(\theta_1^*\right)e < 0 \\ -\gamma\dot{\theta}_1 & 0 \le sgn\left(\theta_1^*\right)e < h \\ \beta\dot{e} + \kappa e & sgn\left(\theta_1^*\right)e \ge h \end{cases} \qquad (19)$$

Where, $e=\theta_1^* - \theta_1$ is the load angular position tracking error,

$\beta$ is a speed proportional control gain,
$\kappa$ is a position proportional control gain,
$\gamma$ is the damping parameter, and
sgn (•) is the signum function indicating +1 if • is positive, -1 if • is negative, and 0 if • is zero.

Further, $h=c|\theta_1^*|$ is the damping range to prevent a chattering by the feedback control, and c is a parameter of the damping range h.

The switching torque u in equation (19) implies that it is possible to stably converge the load angular position $\theta_1$ on the load angular position reference input $\theta_1^*$ without chattering by causing a motion of the load 201 having viscous friction with the damping parameter $\gamma$ when the tracking error between the load angular position $\theta_1$ and the load angular position reference input $\theta_1^*$ is small, in particular, when the tracking error in the direction of decrease of the absolute value of the load angular position $\theta_1$ is within the damping range h.

Furthermore, the switching torque u implies that it is possible to converge the load angular position $\theta_1$ on the load angular position reference input $\theta_1^*$ doing a feedback control with stiffness given by the position proportional control gain it and with the viscous friction given by the speed proportional control gain $\beta$ when the tracking error is outside of the damping range h.

It is preferable to set the damping parameter $\gamma$ as a function of the load angular position reference input $\theta_1^*$ and the load angular position tracking error e as in equation (20), for example.

[Equation 20]

$$\gamma = \frac{2\beta}{|\theta_1^*|}\left|e - \frac{|\theta_1^*|}{2}\right| \qquad (20)$$

In other words, the switching linear control unit 120 receives the load angular position reference input $\theta_1^*$ from the load angular position reference input unit 102, and the load angular position reference input $\theta_1^*$ is input to the damping range unit 121, damping parameter unit 122, and switching linear torque unit 123.

Then, the damping range unit 121 calculates the damping range as $h=c|\theta_1^*|$ using the load angular position reference input $\theta_1^*$ and parameter c.

The obtained damping range h is output to the control switching unit 124.

The damping parameter unit 122 calculates the damping parameter $\gamma$ in accordance with equation (20), and outputs the calculation result to the switching linear torque unit 123.

The switching linear torque unit 123 calculates the switching linear torque u described in equation (19) using the damping parameter $\gamma$ from the damping parameter unit 122, the speed proportional control gain $\beta$, and the position proportional control gain $\kappa$, both gains being previously determined.

The calculated switching linear torque u is output to the control switching unit 124.

The control switching unit 124 switches and selects the switching linear torque u calculated by the switching linear torque unit 123 with reference to the load angular position tracking error e and the damping range h.

The switching linear torque selected by the control switching unit 124 is output to the torque reference input unit 111.

Furthermore, the nonlinear torque unit 133 calculates the nonlinear torque as Nx+Ny in equation (12) based on the estimated wheel vertical acceleration calculated using equation (15) and the estimated wheel horizontal speed calculated using equation (14) and outputs the calculation result.

The torque reference input unit 111 calculates the torque reference input $T_{ref}$ using the switching linear torque u and the nonlinear torque Nx+Ny in accordance with equation (21) and output the calculation result.

[Equation 21]

$$T_{ref} = \frac{u + N_x + N_y}{r} \qquad (21)$$

Where, r is the wheel radius.

The vehicle 141 is driven and controlled by the torque $T_{ref}$.

The first embodiment having the structure as described above has following effects.

(1) In the first embodiment, the load angular position $\theta_1$ is divided into three ranges as described in equation (19), and the optimum torque reference input can be calculated in each range.

Furthermore, the control switching unit 124 switches the control depending on whether within the damping range or out of the damping range.

Therefore, it is possible to smoothly converge the load angular position $\theta_1$ on the load angular position reference input $\theta_1^*$ without the vibration of the load angular position $\theta_1$ in the vicinity of the load angular position reference input $\theta_1^*$.

As a result, it is possible to accomplish a stable horizontal travel motion.

(2) The damping parameter unit 122 is disposed and the damping parameter $\gamma$ is set by equation (20). Therefore, it is possible to converge the load angular position $\theta_1$ on the load angular position reference input $\theta_1^*$ more smoothly and quickly than when the damping parameter $\gamma$ is a constant value.

(3) The vehicle 141 is controlled using the estimated wheel horizontal speed in equation (14), and it is possible to converge the wheel horizontal speed $v_2$ (= the first order time derivative of $x_2$) of the vehicle 141 on the wheel horizontal speed reference input $v_2^*$ (= the first order time derivative of $x_2^*$) if the wheel 202 relatively slips on the road 203.

(4) The vehicle 141 is controlled using the estimated wheel vertical acceleration in equation (15), and it is possible to stably control the load angular position $\theta_1$ as long as the wheel 202 contacts with the road 203, even if the road 203 is bumpy.

(An experimental example)

Hereinafter, an experimental example verifying the effects of the present invention is described.

A simulation result of the first embodiment is described as the experimental example.

Here are the values used for the simulation:

$$m_1 = 70[kg],$$

$$J_1 = 25.2 \ [kg \cdot m^2],$$

$$m_2 = 15[kg],$$

$$J_2 = 0.075 \ [kg \cdot m^2],$$

$$l = 0.9[m],$$

$$r = 0.1 \ [m],$$

$$D = 0.1 \ [\text{N·s/m}],$$

$$g = 9.8 \ [\text{m/s}^2],$$

$$T = 1 \times 10^{-3} \ [\text{s}],$$

$$\kappa = 40 \ [\text{s}^{-1}]$$

$$J_{10} = m_1 \times l^2 + J_1 \ [\text{kg·m}^2],$$

$$\beta_0 = 2\pi\kappa \ [\text{s}^{-1}],$$

$$\beta = \beta_0 \times J_{10} \ [\text{N·m·s/rad}],$$

$$\gamma = 0.1 \ [\text{N·m·s/rad}],$$

$$\text{pcl} = [-49.9, -201.4] \ [\text{rad/s}],$$

and

$$\text{td} = 0.5 [\text{s}].$$

Where, m1 is the load mass,

$J_1$ is the load inertia moment,
$m_2$ is the wheel mass,
$J_2$ is the wheel inertia moment,
1 is the distance between the center of gravity of the load and the center of gravity of the wheel,
r is the wheel radius,
D is the viscous friction between the wheel and the road,
g is the gravitational acceleration,
T is a sampling time,
$\kappa$ is the position proportional control gain according to the present invention,
$J_{10}$ is a nominal inertia moment,
$\beta_0$ is a normalized speed proportional control gain according to the present invention,
P is a speed proportional control gain according to the present invention,
$\gamma$ is the friction parameter according to the present invention,
pcl is a closed loop pole according to the conventional method, and
td is an impulse disturbance time.

The viscous friction between the wheel and the road D is a viscous friction acting between the wheel 202 and the road 203 illustrated in Fig. 2.

The nominal inertia moment $J_{10}$ is a parameter normalizing a speed control loop in the present invention.

The symbol pel is a pole of a closed loop disposed at a state feedback control according to the conventional method.

Consider a case that there is an impulse-like acceleration disturbance input to the wheel 202 in the upward vertical direction at the impulse disturbance time td.

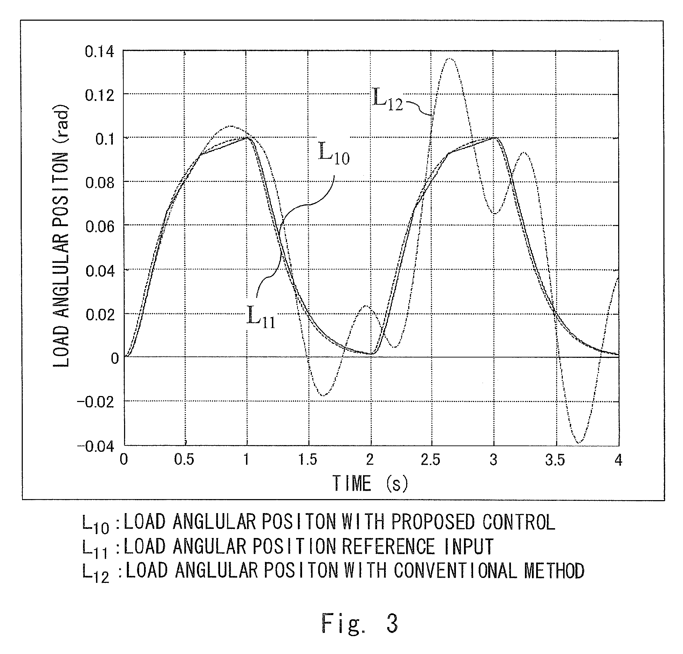

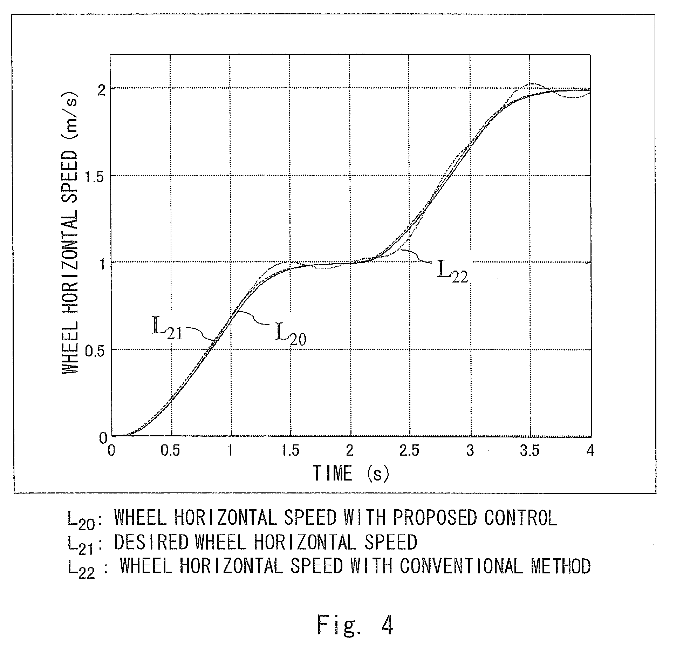

Fig. 3 and Fig. 4 are plots showing the simulation result.

Fig. 3 shows a variation of the load angular position.

In Fig. 3, a solid line $L_{10}$ denotes the load angular position with proposed control, the broken line $L_{11}$ denotes the load angular position reference input, and the chain line $L_{12}$ denotes the load angular position with the conventional method.

It turns out that the present invention and the conventional method equably track the load angular position reference input before the 0.5 [s] when the acceleration disturbance is applied; however, after 0.5[s], the load angular position oscillates in the conventional method, on the other hand, the load angular position continues to track the load angular position reference input without the oscillation after the acceleration disturbance is applied in the present invention.

Then, the time change of the load angular position of the present invention becomes a polygonal line due to the control applying only the damping within the damping range in equation (19). This implies that it is difficult for the load angular position to vibrate in the vicinity of the load angular position reference input by employing the damping range.

Furthermore, the wheel vertical acceleration observer 131 calculates the estimated wheel vertical acceleration in equation the (15), and the nonlinear torque unit 133 calculates the nonlinear torque Ny. As a result, it is possible to compensate the acceleration disturbance applied to the wheel 202 in the vertical direction due to the bumps on the road 203. This shows that it is possible to stabilize the load angular position in the present invention even if the acceleration disturbance is applied.

Fig. 4 shows a variation of the horizontal speed of the wheel.

In Fig. 4, a solid line $L_{20}$ denotes the wheel horizontal speed with the proposed control, the broken line $L_{21}$ denotes the desired wheel horizontal speed, and the chain line $L_{22}$ denotes the wheel horizontal speed with the conventional method.

It turns out that both the present invention and the conventional method track the desired wheel horizontal speed before 0.5 [s] when the acceleration disturbance is applied; however, after 0.5 [s], the wheel horizontal speed becomes vibrational in the conventional method, on the other hand, the wheel horizontal speed does not become vibrational and tracks the desired wheel horizontal speed in the present invention.

(Modified example 1)

In the first embodiment, the damping parameter $\gamma$ is calculated by the damping parameter unit 122 in accordance with equation (20); however, the damping parameter $\gamma$ may be a predetermined fixed value.

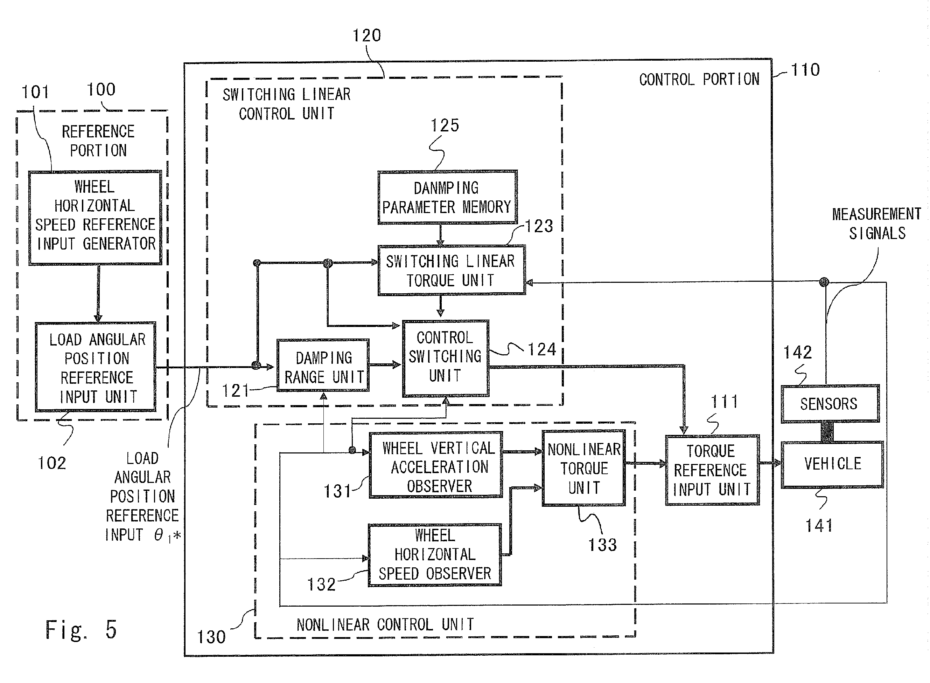

In other words, the predetermined damping parameter may be set and stored to a damping parameter memory (damping parameter memory) 125 as shown in Fig. 5. Then, the damping parameter memory 125 may supply a value of the damping parameter $\gamma$ to the switching linear torque unit 123.

(Modified example 2)

In the first embodiment, it is explained as the most preferable embodiment that the nonlinear control unit 130 is disposed. However, it is not be necessary to dispose the nonlinear control unit 130 if a stable control which smoothly converges the load angular position $\theta_1$ on the load angular position reference input $\theta_1^*$ is accomplished without the vibration in the vicinity of the load angular position reference input $\theta_1^*$.

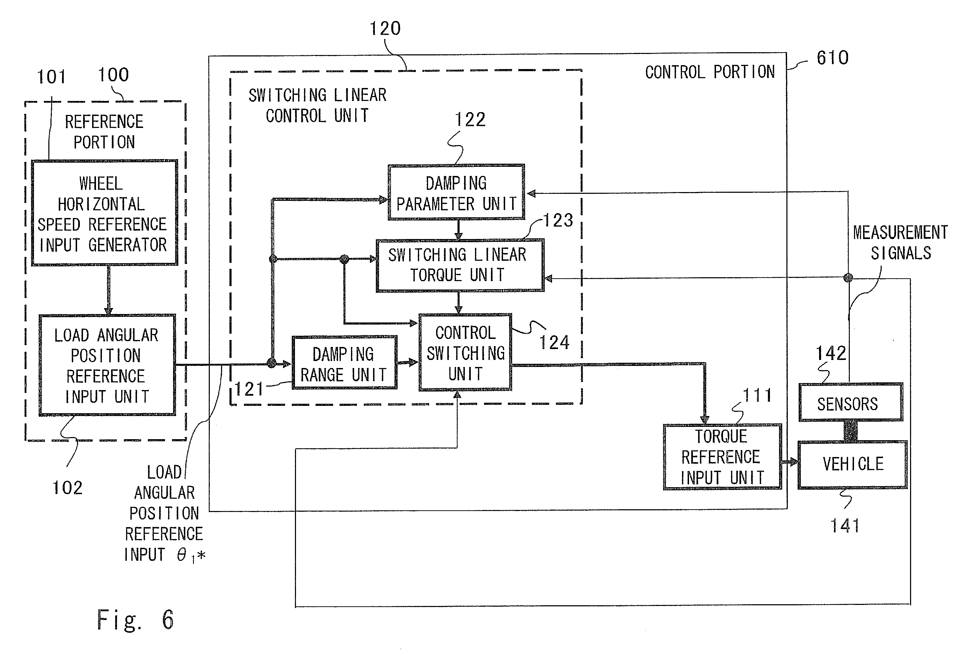

In other words, the nonlinear control unit 130 may be omitted from the control portion 610 as illustrated in Fig. 6.

Here, if the nonlinear control unit 130 is omitted and only the switching linear control unit 120 is disposed, it is preferable to set the gains to suppress the nonlinear terms as the disturbance as much as possible, by adjusting the gains of the linear feedback torque of the switching linear torque u calculated in the switching linear torque unit 123.

Needless to say, it is preferable to dispose the nonlinear control unit 130 to take into account the nonlinear terms due to travelling on the uneven and bumpy road, a collision with an obstacle, and a slipping of the wheel.

The present invention is not limited to the above embodiments and includes modifications and improvements within a range accomplishing the purpose of the present invention, which is defined by the claims.

For example, the position P / speed P control may be replaced with any control law such as the position P / speed PI control, the position P / speed I-P control, and the position PID control in equation (19).

Industrial Applicability

According to the present invention, the inverted two-wheel vehicle can move at the desired horizontal speed without a turnover and an oscillation even if there is unevenness on the road or even if the vehicle collides with a human or an object. Therefore, the present invention is widely applicable to a two-wheel robot travelling at the inverted state, an electric wheelchair, an automatic delivery device, a robot working at narrow space such as a lifesaving at the time of disaster, an assembly apparatus assembling the electric device sensitive to a vibration, and so on.

**Reference Signs List**

| 100 | REFERENCE PORTION |
|---|---|
| 101 | WHEEL HORIZONTAL SPEED REFERENCE INPUT GENERATOR |
| 102 | LOAD ANGULAR POSITION REFERENCE INPUT UNIT |
| 110, 610 | CONTROL PORTION |
| 111 | TORQUE REFERENCE INPUT UNIT |
| 120 | SWITCHING LINEAR CONTROL UNIT |
| 121 | DAMPING RANGE UNIT |
| 122 | DAMPING PARAMETER UNIT |
| 123 | SWITCHING LINEAR TORQUE UNIT |
| 124 | CONTROL SWITCHING UNIT |
| 125 | DAMPING PARAMETER MEMORY |
| 130 | NONLINEAR CONTROL UNIT |
| 131 | WHEEL VERTICAL ACCELERATION OBSERVER |
| 132 | WHEEL HORIZONTAL SPEED OBSERVER |
| 133 | NONLINEAR TORQUE UNIT |
| 141 | VEHICLE |
| 142 | SENSORS |
| 201 | LOAD |
| 202 | WHEEL |
| 203 | ROAD |
| 1001 | FRICTION OBSERVER |
| 1002 | TARGET STATE GENERATOR |
| 1003 | STATE FEEDBACK GAINS |
| 1004 | INVERTED ROBOT |

**Claims**

1. A control device controlling motions of an inverted vehicle which keeps an inverted state, the inverted vehicle having driving means having a wheel and a load controlled to keep the inverted state above the wheel through a link, the control device executing the following control of:

   defining an angle between a straight line connecting a center of gravity of the load with a center of gravity of the wheel and a vertical straight line as a load angular position; **characterized by**,
   applying only a damping to the inverted vehicle if the load angular position is in the vicinity of a load angular position reference input that is a desired load angular position.

2. The control device of the inverted vehicle according to claim 1, wherein a damping range as a width in the vicinity of the load angular position reference input is calculated by multiplying an absolute value of the load angular position reference input by a predetermined coefficient.

3. The control device of the inverted vehicle according to claim 1 or 2, wherein the damping is defined as a viscous friction.

4. The control device of the inverted vehicle according to claim 3, wherein a damping parameter as the viscous friction is calculated as a function of a load angular position tracking error and the load angular position reference input, where the load angular position tracking error is obtained by subtracting the load angular position from the load angular position reference input.

5. The control device of the inverted vehicle according to claim 4, wherein the damping parameter is calculated by subtracting half of an absolute value of the load angular position reference input from the load angular position tracking error, dividing an absolute value of the subtracted value by the absolute value of the load angular position reference input, and multiplying the divided value by a constant.

6. The control device of the inverted vehicle according to claim 3, wherein the damping parameter as the viscous friction is defined as a constant value.

7. The control device of the inverted vehicle according to any one of claim 4 to claim 6, the control device comprising:

a switching linear torque unit calculating a damping torque and a linear feedback torque, the damping torque being obtained by applying a negative sign to a product of the load angular speed and the damping parameter, the linear feedback torque being obtained by multiplying at least one of a position tracking error, a speed tracking error, and an acceleration tracking error by a predetermined gain; and
a control switching unit switching and outputting the damping torque and the linear feedback torque calculated by the switching linear torque unit.

8. The control device of the inverted vehicle according to claim 7, wherein the control switching unit outputs the damping torque if $0 \leq \text{sgn}(\theta_1{}^*) \cdot e < h$, and outputs the linear feedback torque otherwise, where $e=\theta_1{}^*- \theta_1$ holds, $\theta_1{}^*$ is the load angular position reference input, $\theta_1$ is the load angular position, sgn ($\cdot$) is a signum function indicating +1 if $\cdot$ is positive, -1 if $\cdot$ is negative, and 0 if $\cdot$ is zero, and h is the damping range calculated by multiplying the absolute value of the load angular position reference input by a predetermined coefficient.

**Patentansprüche**

1. Steuervorrichtung zur Steuerung von Bewegungen eines invertierten Fahrzeugs, das einen invertierten Zustand hält, wobei das invertierte Fahrzeug eine Antriebseinrichtung, ein Rad und eine Last hat, die gesteuert wird, um den invertierten Zustand über den Rädern durch eine Verknüpfung zu halten, wobei die Steuervorrichtung die folgenden Steuerungsschritte ausführt:

Festlegen eines Winkels zwischen einer geraden Linie, die einen Schwerpunkt der Last mit einem Schwerpunkt des Rads verbindet, und einer vertikalen geraden Linie als eine Lastwinkelposition; **gekennzeichnet durch** Anwenden eines Dämpfens auf das invertierte Fahrzeug, nur wenn die Lastwinkelposition in der Nähe von einer Lastwinkelpositionsreferenzeingabe ist, die eine gewünschte Lastwinkelposition ist.

2. Steuervorrichtung des invertierten Fahrzeugs gemäß Anspruch 1, wobei ein Dämpfungsbereich als eine Breite in der Nähe der Lastwinkelpositionsreferenzeingabe durch Multiplizieren eines Absolutwerts der Lastwinkelpositionsreferenzeingabe mit einem vorbestimmten Koeffizienten berechnet wird.

3. Steuervorrichtung des invertierten Fahrzeugs gemäß Anspruch 1, wobei die Dämpfung als eine viskose Reibung festgelegt ist.

4. Steuervorrichtung des invertierten Fahrzeugs gemäß Anspruch 3, wobei ein Dämpfungsparameter als die viskose Reibung als eine Funktion von einem Lastwinkelpositionsverfolgungsfehler und der Lastwinkelpositionsreferenzeingabe berechnet wird, wobei der Lastwinkelpositionsverfolgungsfehler durch Subtrahieren der Lastwinkelposition von der Lastwinkelpositionsreferenzeingabe erhalten wird.

5. Steuervorrichtung des invertierten Fahrzeugs gemäß Anspruch 4, wobei der Dämpfungsparameter durch Subtrahieren einer Hälfte eines Absolutwerts der Lastwinkelpositionsreferenzeingabe von dem Lastwinkelpositionsverfolgungsfehler, Dividieren eines Absolutwerts des subtrahierten Werts durch den Absolutwert der Lastwinkelpositionsreferenzeingabe und Multiplizieren des dividierten Werts mit einer Konstanten berechnet wird.

6. Steuervorrichtung des invertierten Fahrzeugs gemäß Anspruch 3, wobei der Dämpfungsparameter als die viskose Reibung als ein konstanter Wert definiert ist.

7. Steuervorrichtung des invertierten Fahrzeugs gemäß einem der Ansprüche 4 bis 6, mit:

einer Lineares-Drehmoment-Umschalteinheit, die ein Dämpfungsdrehmoment und ein lineares Rückführungsdrehmoment berechnet, wobei das Dämpfungsdrehmoment durch ein Anwenden eines negativen Vorzeichens auf ein Produkt aus der Lastwinkelgeschwindigkeit und dem Dämpfungsparameter erhalten wird, das lineare Rückführungsdrehmoment durch Multiplizieren von mindestens einem Wert aus einem Positionsverfolgungsfehler, einem Geschwindigkeitsverfolgungsfehler und einem Beschleunigungsverfolgungsfehler mit einer vorbestimmten Verstärkung erhalten wird; und

einer Steuerumschalteinheit, die das Dämpfungsdrehmoment und das lineare Rückführungsdrehmoment, die durch die Lineares-Drehmoment-Schalteinheit berechnet werden, umschaltet und ausgibt.

8. Steuervorrichtung des invertierten Fahrzeugs gemäß Anspruch 7, wobei die Steuerumschalteinheit das Dämpfungsdrehmoment ausgibt, wenn $0 \leq \mathrm{sgn}(\theta_1{}^*) \cdot e < h$, und sonst das lineare Rückführungsdrehmoment ausgibt, wobei $e=\theta_1{}^*-\theta_1$ gilt, $\theta_1{}^*$ die Lastwinkelpositionsreferenzeingabe ist, $\theta_1$ die Lastwinkelposition ist, $\mathrm{sgn}(\cdot)$ eine Vorzeichenfunktion ist, die, wenn $\cdot$ positiv ist, +1, wenn $\cdot$ negativ ist, -1, und wenn $\cdot$ Null ist, 0 angibt, und h der Dämpfungsbereich ist, der durch Multiplizieren des Absolutwerts der Lastwinkelpositionsreferenzeingabe mit einem vorbestimmten Koeffizienten berechnet wird.

## Revendications

1. Dispositif de commande qui contrôle les mouvements d'un véhicule inversé qui conserve un état inversé, le véhicule inversé ayant un moyen d'entraînement qui possède une roue et une charge contrôlée afin de maintenir l'état inversé au-dessus de la roue par le biais d'une liaison, le dispositif de commande exécutant la commande suivante qui consiste à :

   définir un angle entre une ligne droite qui relie un centre de gravité de la charge à un centre de gravité de la roue, et une ligne droite verticale sous forme de position angulaire de la charge ; **caractérisé par**
   l'application d'un amortissement au véhicule inversé uniquement si la position angulaire de la charge est à proximité d'une entrée de référence de position angulaire de la charge qui est une position angulaire de la charge souhaitée.

2. Dispositif de commande du véhicule inversé selon la revendication 1, dans lequel une plage d'amortissement sous forme de largeur à proximité de l'entrée de référence de position angulaire de la charge est calculée en multipliant une valeur absolue de l'entrée de référence de position angulaire de la charge par un coefficient prédéterminé.

3. Dispositif de commande du véhicule inversé selon la revendication 1 ou 2, dans lequel l'amortissement est défini comme un frottement visqueux.

4. Dispositif de commande du véhicule inversé selon la revendication 3, dans lequel un paramètre d'amortissement sous forme de frottement visqueux est calculé en fonction d'une erreur de suivi de position angulaire de la charge et de l'entrée de référence de position angulaire de la charge, l'erreur de suivi de position angulaire de la charge étant obtenue en soustrayant la position angulaire de la charge de l'entrée de référence de position angulaire de la charge.

5. Dispositif de commande du véhicule inversé selon la revendication 4, dans lequel le paramètre d'amortissement est calculé en soustrayant la moitié d'une valeur absolue de l'entrée de référence de position angulaire de la charge de l'erreur de suivi de position angulaire de la charge, en divisant une valeur absolue de la valeur soustraite par la valeur absolue de l'entrée de référence de position angulaire de la charge, et en multipliant la valeur divisée par une constante.

6. Dispositif de commande du véhicule inversé selon la revendication 3, dans lequel le paramètre d'amortissement sous forme de frottement visqueux est défini comme une valeur constante.

7. Dispositif de commande du véhicule inversé selon l'une quelconque des revendications 4 à 6, le dispositif de commande comprenant :

   une unité de couple linéaire de commutation qui calcule un couple d'amortissement et un couple de retour linéaire, le couple d'amortissement étant obtenu en appliquant un signe négatif à un produit de la vitesse angulaire de la charge et du paramètre d'amortissement, le couple de retour linéaire étant obtenu en multipliant au moins l'une d'une erreur de suivi de position, d'une erreur de suivi de vitesse, et d'une erreur de suivi d'accélération par un gain prédéterminé ; et
   une unité d'activation de commande qui active et fournit le couple d'amortissement et le couple de retour linéaire calculés par l'unité de couple linéaire d'activation.

8. Dispositif de commande du véhicule inversé selon la revendication 7, dans lequel l'unité d'activation de commande fournit le couple d'amortissement si $0 \leq$ sgn $(\theta_1{}^*) \cdot e < h$, et fournit le couple de retour linéaire dans le cas contraire, où $e = \theta_1{}^* - \theta_1$ est maintenu, $\theta_1{}^*$ correspond à l'entrée de référence de position angulaire de la charge, $\theta_1$ correspond à la position angulaire de la charge, sgn correspond à une fonction signum qui indique +1 si $\cdot$ est positif, -1 si $\cdot$ est négatif, et 0 si $\cdot$ est nul, et h correspond à la plage d'amortissement calculée en multipliant la valeur absolue de l'entrée de référence de position angulaire de la charge par un coefficient prédéterminé.

Fig. 1

Fig. 2

$L_{10}$ : LOAD ANGLULAR POSITON WITH PROPOSED CONTROL
$L_{11}$ : LOAD ANGULAR POSITION REFERENCE INPUT
$L_{12}$ : LOAD ANGLULAR POSITON WITH CONVENTIONAL METHOD

Fig. 3

$L_{20}$: WHEEL HORIZONTAL SPEED WITH PROPOSED CONTROL
$L_{21}$: DESIRED WHEEL HORIZONTAL SPEED
$L_{22}$: WHEEL HORIZONTAL SPEED WITH CONVENTIONAL METHOD

Fig. 4

Fig. 5

Fig. 6

Fig. 7

Fig. 8

Fig. 9

Fig. 10

EP 2 426 566 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006123014 A
- JP 2006315666 A

- EP 2017172 A1